# EUROPEAN PATENT APPLICATION

(11) **EP 4 057 759 A1**
(43) Date of publication of application: **14.09.2022**
(21) Application number: 19951526.3
(22) Date of filing: 07.11.2019
(51) Int. Cl.: H04W 74/08

(54) **TERMINAL AND COMMUNICATION METHOD**

(71) Applicant: NTT DOCOMO, INC., Chiyoda-Ku Tokyo 100-6150 (JP)
(72) Inventor: OHARA, Tomoya, Tokyo 100-6150 (JP)
(74) Representative: Hoffmann Eitle
(86) International application number: PCT/JP2019/043778
(87) International publication number: WO 2021/090464

(57) **Abstract**

A terminal includes a control unit that performs at least one of the following in a case where a 2-step Random Access Channel (RACH) configuration is to be configured for a Bandwidth Part (BWP) reusing a RACH configuration parameter configured for another uplink BWP as a 2-step RACH configuration parameter, newly configuring the 2-step RACH configuration parameter, or configuring a default parameter as the 2-step RACH configuration parameter; and a transmitting unit that transmits a MessageA in the 2-step RACH by using the 2-step RACH configuration parameter.

## Description

### TECHNICAL FIELD

The present invention relates to a terminal and a communication method in a radio communication system.

### BACKGROUND ART

For 3GPP Release 16 NR, a study on 2-step RACH has been started. According to 2-step RACH, it is considered that time required for processing of random access channel (RACH) can be reduced and power consumption can be reduced.

The 2-step RACH procedure is performed with two steps. Specifically, a user equipment transmits MessageA to a base station. The base station transmits MessageB to the user equipment. Here, the MessageA is a message that is equivalent to Message1 + Message3 in a 4-step RACH procedure. Furthermore, the MessageB is a message that is equivalent to Message2 + Message4 in a 4-step RACH procedure.

### Related Art Document

### [Non-Patent Document]

Non-Patent Document 1: 3GPP TS 38.211 V15.4.0(2018-12)

### SUMMARY OF THE INVENTION

### [PROBLEM TO BE SOLVED BY THE INVENTION]

It is assumed that, when some parameters from among parameters for 2-step RACH are not configured as parameters specific to 2-step RACH, parameter configured for 4-step RACH are to be reused. Furthermore, it is assumed that some parameters from among the parameters for the 2-step RACH are unable to be configured as parameters specific to 2-step RACH, so that parameters configured for the 4-step RACH are to be reused.

The is a need for a method that allows a terminal to perform an appropriate operation, even if there is no parameter to be reused in the terminal.

### [MEANS FOR SOLVING THE PROBLEM]

According to an aspect of the present invention, there is provided a terminal including
a control unit that performs at least one of the following in a case where a 2-step Random Access Channel (RACH) configuration is to be configured for a Bandwidth Part (BWP)
   reusing a RACH configuration parameter configured for another uplink BWP as a 2-step RACH configuration parameter,
   newly configuring the 2-step RACH configuration parameter, or
   configuring a default parameter as the 2-step RACH configuration parameter; and
a transmitting unit that transmits a MessageA in the 2-step RACH by using the 2-step RACH configuration parameter.

### [ADVANTAGE OF THE INVENTION]

According to an embodiment, there is provided a method that allows a terminal to perform an appropriate operation, even if there is no parameter to be reused in the terminal.

### BRIEF DESCRIPTION OF DRAWINGS

FIG. 1 is a configuration diagram of a communication system according to an embodiment.
FIG. 2 is a diagram illustrating an example of a 4 step RACH (Contention based random access) procedure.
FIG. 3 is a diagram illustrating an example of a 2 step RACH (Contention based random access) procedure.
FIG. 4 is a diagram illustrating an example of a parameter.
FIG. 5 is a diagram illustrating an example of a functional configuration of a terminal.
FIG. 6 is a diagram illustrating an example of a functional configuration of a base station.
FIG. 7 is a diagram illustrating an example of a hardware configuration of the terminal and the base station.

### [EMBODIMENTS OF THE INVENTION]

Hereinafter, embodiments of the present invention are described with reference to the drawings. The embodiments described below are merely examples, and the embodiments to which the present invention is applied are not limited to the following embodiments.

The radio communication system according to the following embodiments is assumed to basically conform to NR, but this is an example, and the radio communication system according to the embodiments may conform to a radio communication system other than NR (e.g., LTE) in whole or in part.

### (Overall System Configuration)

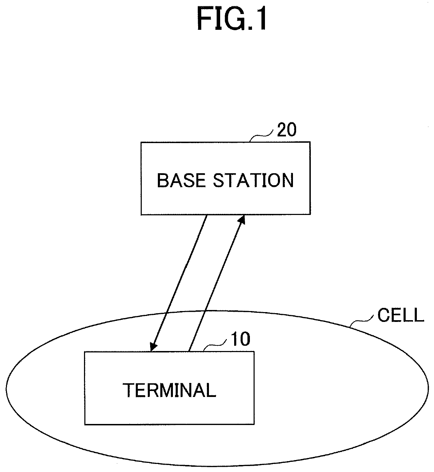

FIG. 1 illustrates a configuration diagram of a radio communication system according to the present embodiment. The radio communication system according to the embodiments includes a terminal 10 and a base station 20 as illustrated in FIG. 1. In FIG. 1, one terminal 10 and one base station 20 are illustrated. This is an example, and there may be a plurality of units of the terminal 10 and a plurality of the base stations 20.

The terminal 10 is a communication device having a radio communication function, such as a smartphone, a cellular phone, a tablet, a wearable terminal, and a communication module for M2M (Machine-to-Machine). The terminal 10 wirelessly connects to the base station 20 and utilizes various communication services provided by the radio communication system. The base station 20 is a communication device that provides one or more cells and wirelessly communicates with the terminal 10. Both the terminal 10 and the base station 20 are capable of transmitting and receiving signals by using beamforming. The terminal 10 may also be referred to as a UE, and the base station 20 may be referred to as a gNB.

In the embodiments, the duplex method may be a Time Division Duplex (TDD) method or a Frequency Division Duplex (FDD).

For the 3GPP release 16NR, a study on a 2-step RACH has been started. According to the 2-step RACH, the time required to process a random access channel (RACH) procedure can be reduced and the power consumption can be reduced.

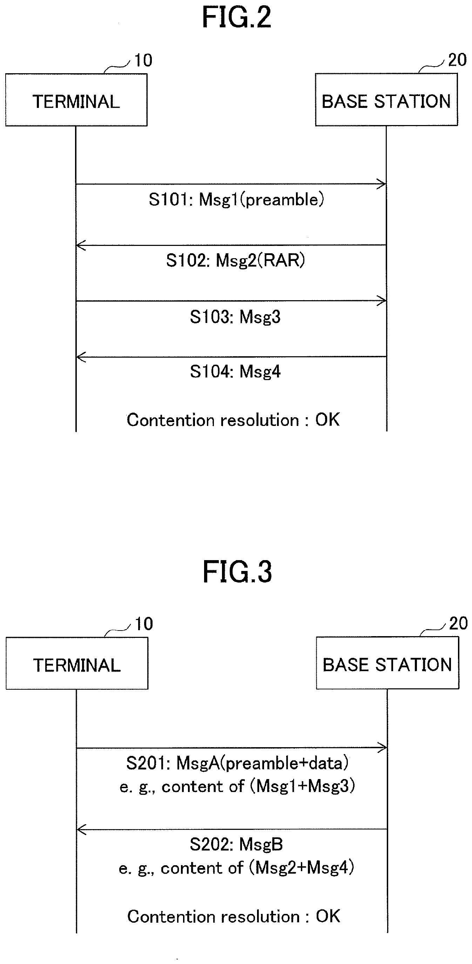

FIG. 2 illustrates an example of a typical 4-step RACH (Contention Based Random Access) procedure.

In the 4-step RACH procedure illustrated in FIG. 2, first, at step S101, the terminal 10 transmits a Message 1 (random access preamble) to the base station 20. At step S102, the base station 20 transmits a Message2 (random access response (RAR)) to the terminal 10. At step S103, the terminal 10 transmits the Message3 to the base station 20. At step S104, the base station 20 transmits the Message4 to the terminal 10.

FIG. 3 illustrates an example of a 2-step RACH (Contention Based Random Access) procedure.

In the 2-step RACH procedure illustrated in FIG. 3, the RACH procedure is performed in two steps. Specifically, at step S201, the terminal 10 transmits the MessageA to the base station 20. At step S202, the base station 20 transmits the Message B to the terminal 10. Here, MessageA is the message equivalent to Message1+Message3 in the 4-step RACH procedure illustrated in FIG. 2. MessageB corresponds to Message2+Message4 in the 4-step RACH procedure illustrated in FIG. 2.

MessageA includes a random access preamble and data sent by Physical Uplink Shared Channel (PUSCH). From a higher layer perspective, MessageA may be considered as a single message. From a physical layer perspective, however, it is assumed that, in MessageA, a random access preamble resource may be a separate resource from a PUSCH resource, for example. In other words, the transmission of the Message A by the terminal 10 is assumed to be equivalent to the transmission of two signals, that is, the terminal 10 transmits a random access preamble and then, before receiving any message from the base station 20, transmits data (equivalent to the Message 3) on the PUSCH. As MessageA, the order of the random access preamble transmission timing and the PUSCH transmission timing may be reversed.

Currently, it is assumed that, in addition to the contention-based random access, contention free random access is to be adopted for the 2 step RACH procedure.

Details of the MessageA (MsgA) are currently discussed in the 3GPP. Basically, a preamble + a PUSCH is referred to as the MsgA. It is assumed that the preamble and the PUSCH are not integrated, at least, from the perspective of a physical layer. For example, it is assumed that transmissions of the preamble and the PUSCH having separated resources are collectively referred to as the MsgA.

A MsgA PUSCH occasion is a single MsgA PUSCH resource. Furthermore, a MsgA RACH occasion is a single MsgA preamble resource. The MsgA PUSCH occasion and the MsgA RACH occasion are indicated as different resources.

It has been studied to define a correspondence relationship between a MsgA PUSCH occasion and a MsgA RACH occasion (the correspondence of which Msg PUSCH is transmitted by the terminal 10 that has transmitted the MsgA RACH). As the correspondence relationship, detailed correspondence has been studied, including one-to-one, many-to-one, one-to-many, and many-to-many.

It is assumed that, for some parameters among the parameters configured for the 2-step RACH, if the parameters are not to be configured as parameters specific to the 2-step RACH, parameters configured for the 4-step RACH are to be reused.

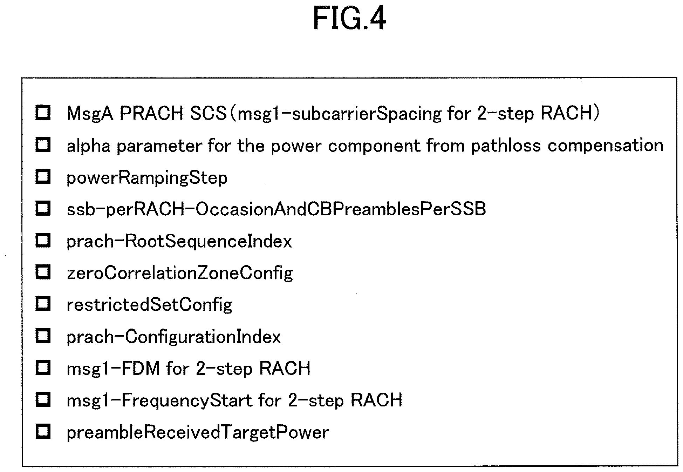

FIG. 4 is a diagram illustrating an example of 4-step RACH parameters that are expected to be reused as 2-step RACH parameters.

In the 3GPP standardization meeting, it has been assumed that 2-step RACH can be configured for a Bandwidth Part (BWP) for which a 4-step Contention Based Random Access (CBRA) resource is not configured.

### (Problem)

As described above, it is assumed that, when some parameters from among parameters for the 2-step RACH are not configured as parameters specific to 2-step RACH, parameters configured for 4-step RACH are to be reused. In this regard, if a 2-step RACH is configured for a BWP for which no resource for the 4-step CBRA is configured, since no 4-step RACH is configured for the Uplink (UL) BWP, there is no corresponding parameter for the 4-step RACH to be reused in the same UL BWP. As described above, in a case where a 4-step RACH parameter is assumed to be reused in the terminal 10 as a parameter for a 2-step RACH, there is a need for a method that allows the terminal 10 to perform an appropriate operation, even if there is no corresponding parameter for the 4-step RACH.

### (Proposal 1)

Suppose that, when a 2-step RACH configuration is to be configured for a BWP for which no 4-step RACH configuration (e.g., 4-step CBRA resources) is configured, a 2-step RACH parameter is to be used such that, if the parameter is not explicitly configured as the 2-step RACH parameter, a parameter configured for a 4-step RACH is assumed to be reused. In this case, the terminal 10 may reuse the 4-step RACH parameter configured for another UL BWP specified/notified in advance as the 2-step RACH parameter, if the corresponding parameter is not explicitly configured as a 2-step RACH parameter.

The other UL BWP specified/notified may be an initial active UL BWP, an initial UL BWP, a default UL BWP, a first active UL BWP, a UL BWP to be used for RRC_IDLE/INACTIVE state, or another UL BWP.

### (Proposal 2)

Suppose that, when a 2-step RACH configuration is to be configured for a BWP for which no 4-step RACH configuration (e.g., 4-step CBRA resources) is configured, a 2-step RACH parameter is to be used such that, if the parameter is not explicitly configured as the 2-step RACH parameter, a parameter configured for a 4-step RACH is assumed to be reused. In this case, the terminal 10 may reuse a 2-step RACH parameter configured for another UL BWP specified/notified in advance as the 2-step RACH parameter, if the corresponding parameter is not explicitly configured as a 2-step RACH parameter.

In addition, if no corresponding 2-step RACH parameter is configured, or no 2-step RACH is configured in the other UL BWP specified/notified above, the terminal 10 may reuse the 4-step RACH parameter configured in the other UL BWP specified/notified in advance, as the 2-step RACH parameter.

The other UL BWP specified/notified in advance may be an initial active UL BWP, an initial UL BWP, a default UL BWP, a first active UL BWP, a UL BWP used for RRC_IDLE/INACTIVE state, or another UL BWP.

### (Proposal 3)

Suppose that, when a 2-step RACH configuration is to be configured for a BWP for which no 4-step RACH configuration (e.g., 4-step CBRA resources) is configured, a 2-step RACH parameter is to be used such that, if the parameter is not explicitly configured as the 2-step RACH parameter, a parameter configured for a 4-step RACH is assumed to be reused. In this case, it may be specified that the 2-step RACH parameter is to be configured for the terminal 10 by using RRC signaling or the like.

For example, it may be specified in a technical specification that, even if the Radio Resource Control (RRC) parameter is optional in the description (ASN.1), if the above-described condition is satisfied, the 2-step RACH parameter shall be configured.

### (Proposal 4)

Suppose that, when a 2-step RACH configuration is to be configured for a BWP for which no 4-step RACH configuration (e.g., 4-step CBRA resources) is configured, a parameter cannot be explicitly configured as a 2-step RACH parameter and a parameter configured for the 4-step RACH is assumed to be reused as the parameter (e.g., *PreambleReceivedTargetPower* or MsgA PRACH SCS (msg1-subcarrierSpacing for 2-step RACH)). In this case, the terminal 10 may reuse a 4-step RACH parameter configured for another UL BWP specified/notified in advance as the 2-step RACH parameter.

The other UL BWP specified/notified may be an initial active UL BWP, an initial UL BWP, a default UL BWP, a first active UL BWP, a UL BWP used for RRC_IDLE/INACTIVE state, or another UL BWP.

### (Proposal 5)

Suppose that, when a 2-step RACH configuration is to be configured for a BWP for which no 4-step RACH configuration (e.g., 4-step CBRA resources) is configured, a parameter cannot be explicitly configured as a 2-step RACH parameter and a parameter configured for the 4-step RACH is assumed to be reused as the parameter (e.g., *PreambleReceivedTargetPower* or MsgA PRACH SCS (msg1-subcarrierSpacing for 2-step RACH)). In this case, the 2-step RACH parameter may be allowed to be configured for the terminal 10 by using RRC signaling or the like, and it may be specified that the 2-step RACH parameter shall be configured.

For example, it may be specified in a technical specification that, if the above-described condition is satisfied, the 2-step RACH parameter can be configured or shall be configured. Furthermore, it may be specified in a technical specification that, if the above-described condition is not satisfied, the 2-step RACH parameter is unable to be configured. Such a 2-step RACH parameter may be configured as a 2-step RACH parameter or may be configured as a 4-step RACH parameter. For example, only the relevant parameters may be configured by using the 4-step RACH configuration.

### (Proposal 6)

Suppose that, when a 2-step RACH configuration is to be configured for a BWP for which no 4-step RACH configuration (e.g., 4-step CBRA resources) is configured, a parameter cannot be explicitly configured as a 2-step RACH parameter and a parameter configured for the 4-step RACH is assumed to be reused as the parameter (e.g., *PreambleReceivedTargetPower* or MsgA PRACH SCS (msg1-subcarrierSpacing for 2-step RACH)). In this case, a value used as a value of the parameter may be specified/notified.

For example, suppose that, when a 2-step RACH configuration is to be configured for a BWP for which no 4-step RACH configuration (e.g., 4-step CBRA resources) is configured, MsgA PRACH SCS is to be used as a parameter that cannot be explicitly configured as a 2-step RACH parameter and a parameter configured for the 4-step RACH is assumed to be reused. In this case, it may be specified that, if there is no value to be referred to, for example, MsgA PRACH SCS may be configured to be 30 kHz.

For example, suppose that, when a 2-step RACH configuration is to be configured for a BWP for which no 4-step RACH configuration (e.g., 4-step CBRA resources) is configured, MsgA PRACH SCS is to be used as a parameter that is unable to be explicitly configured as a 2-step RACH parameter and a parameter configured for the 4-step RACH is assumed to be reused. In this case, a parameter value may be transmitted in advance, as a value used when there is no value to be referred to (for example, it may be transmitted in advance that MsgA PRACH SCS is set to 30 kHz when there is no value to be referred to).

Suppose that, when a 2-step RACH configuration is to be configured for a BWP for which no 4-step RACH configuration (e.g., 4-step CBRA resources) is configured, a 2-step RACH parameter is to be used such that, if the parameter is not explicitly configured as the 2-step RACH parameter, a parameter configured for a 4-step RACH is assumed to be reused. In this case, a value of the parameter to be used when this condition is satisfied may be specified/transmitted, if the corresponding parameter is not explicitly configured as a 2-step RACH parameter.

For example, suppose that, when a 2-step RACH configuration is to be configured for a BWP for which no 4-step RACH configuration (e.g., 4-step CBRA resources) is configured, MsgA PRACH SCS is to be used as a 2-step RACH parameter such that, if the parameter is not explicitly configured as the 2-step RACH parameter, a parameter configured for a 4-step RACH is assumed to be reused. In this case, it may be specified that, for example, MsgA PRACH SCS is set to 30 kHz when there is no value to be referred to.

For example, suppose that, when a 2-step RACH configuration is to be configured for a BWP for which no 4-step RACH configuration (e.g., 4-step CBRA resources) is configured, MsgA PRACH SCS is to be used as a 2-step RACH parameter such that, if the parameter is not explicitly configured as the 2-step RACH parameter, a parameter configured for a 4-step RACH is assumed to be reused. In this case, a value of the parameter may be transmitted in advance, as the value used when there is no value to be referred to (for example, it may be transmitted in advance that MsgA PRACH SCS is set to 30 kHz when there is no value to be referred to).

### (Device Configurations)

Next, examples of functional configurations of the terminal 10 and the base station 20 for executing the above-described processing and operation are described. The terminal 10 and the base station 20 include all the functions for executing the above-described embodiments. However, each of terminal 10 and the base station 20 may be provided with only some functions described in the embodiments. Note that the terminal 10 and the base station 20 may be collectively referred to as a communication apparatus.

### <Terminal>

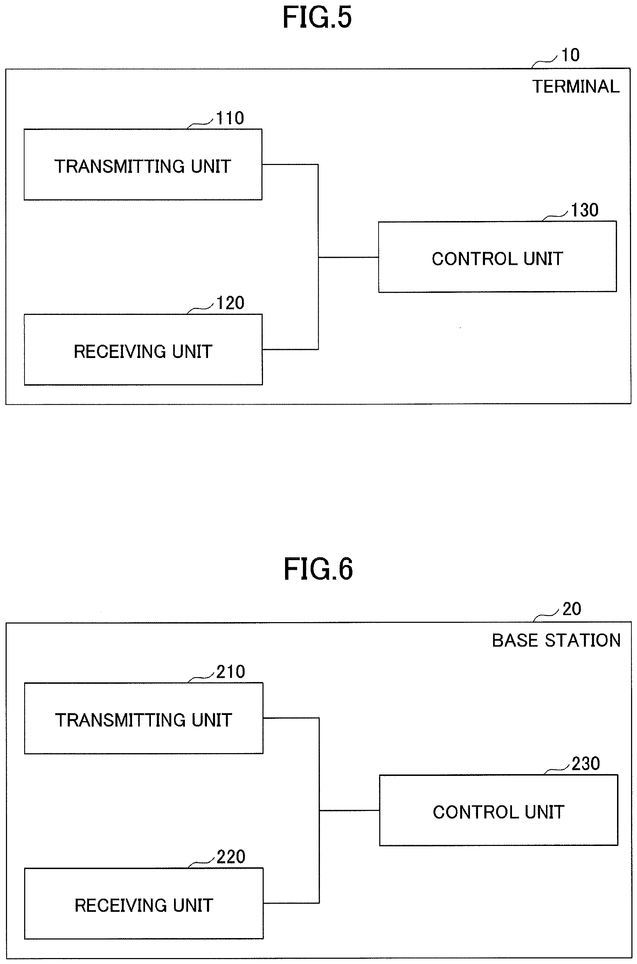

FIG. 5 is a diagram illustrating an example of a functional configuration of the terminal 10. As illustrated in Fig. 5, the terminal 10 includes a transmitting unit 110, a receiving unit 120, and a control unit 130. The functional configuration illustrated in FIG. 5 is an example. A functional division and the names of the functional units may be any division and name provided that the operation according to the embodiments can be executed. The transmitting unit 110 may be referred to as a transmitter, and the receiving unit 120 may be referred to as a receiver.

The transmitting unit 110 creates transmission from transmission data, and wirelessly transmits the transmission signal. The transmitting unit 110 can form one or a plurality of beams. The receiving unit 120 wirelessly receives various signals, and obtains a higher layer signal from the received physical layer signal. Furthermore, the receiving unit 120 includes a measurement unit that obtains received power or the like by performing a measurement of a received signal.

The control unit 130 controls the terminal 10. Note that, a function of the control unit 130 related to transmission may be included in the transmitting unit 110, and a function of the control unit 130 related to reception may be included in the receiving unit 120.

For example, in the 4-step RACH procedure, the transmitting unit 110 transmits a random access preamble. The receiving unit 120 receives a random access response from the base station 20. The control unit 130 obtains information of a radio resource for transmitting the Message 3 from the random access response. The transmitting unit 110 transmits the Message 3 to the base station 20 through the radio resource configured by the control unit 130. The receiving unit 120 receives the Message 4 from the base station 20.

In addition, for example, in the 2-step RACH procedure, the transmitting unit 110 transmits a Message A. That is, the transmitting unit 110 transmits, to the base station 20, a random access preamble in the 2-step RACH procedure, and performs transmission of data on PUSCH in the 2-step RACH procedure before receiving a message corresponding to the Message 2 in the 4-step RACH procedure. The receiving unit 120 receives a Message B.

For example, in a case where 2-step RACH is to be configured for a BWP for which a 4-step RACH configuration (e.g., 4-step CBRA resources) is not configured, a 2-step RACH parameter is to be used such that, if the 2-step RACH parameter is not explicitly configured as a parameter for 2-step RACH, a parameter configured for 4-step RACH is assumed to be reused. In this case, if the parameter is not explicitly configured as a parameter for 2-step RACH, the control unit 130 of the terminal 10 may reuse a 4-step RACH parameter configured for another UL BWP that is specified/notified in advance, as the 2-step RACH parameter.

### <Base Station 20>

Fig. 6 is a diagram illustrating an example of a functional configuration of the base station 20. As illustrated in Fig. 6, the base station 20 includes a transmitting unit 210, a receiving unit 220, and a control unit 230. A functional configuration illustrated in Fig. 6 is an example. A functional division and names of the functional units may be any division and names provided that the operation according to the embodiments can be executed. Note that, the transmitting unit 210 may be referred to as a transmitter, and the receiving unit 220 may be referred to as a receiver.

The transmitting unit 210 includes a function of generating a signal to be transmitted to the terminal 10, and wirelessly transmitting the signal. The receiving unit 220 includes a function of receiving various signals transmitted from the terminal 10, and obtaining, for example, information of a higher layer from the received signals. Furthermore, the receiving unit 220 includes a measurement unit that obtains received power or the like by measuring a signal received by the receiving unit 220.

The control unit 230 controls the base station 20. Note that, a function of the control unit 230 related to transmission may be included in the transmitting unit 210, and a function of the control unit 230 related to reception may be included in the receiving unit 220.

For example, in the 4-step RACH procedure, the receiving unit 220 receives a random access preamble transmitted from the terminal 10. The transmitting unit 210 transmits a random access response to the terminal 10. The control unit 230 includes, in the random access response, information indicating a radio resource for transmitting the Message 3 by the terminal 10. The receiving unit 220 receives the Message 3 from the terminal 10 through the radio resource configured by the control unit 230. The transmitting unit 210 transmits the Message 4 to the terminal 10.

In addition, for example, in the 2-step RACH procedure, the receiving unit 220 receives the MessageA transmitted from the terminal 10. That is, the receiving unit 220 receives the random access preamble in the 2-step RACH procedure from the terminal 10, and the receiving unit 220 receives data on PUSCH in the 2-step RACH procedure before transmitting a message corresponding to the Message 2 in the 4-step RACH procedure. The transmitting unit 210 performs transmission of the Message B.

### (Hardware configuration)

In the block diagrams (FIG. 5 and FIG. 6) used for the description of the embodiments, the blocks of the functional units are illustrated. The functional blocks (configuring units) are implemented by any combination of hardware and/or software. A device of implementing each functional block is not particularly limited. In other words, each functional block may be implemented by one device in which a plurality of elements is physically and/or logically combined or may be implemented by a plurality of devices, that is, two or more devices which are physically and/or logically separated and are directly and/or indirectly connected (for example, a wired and/or wireless manner).

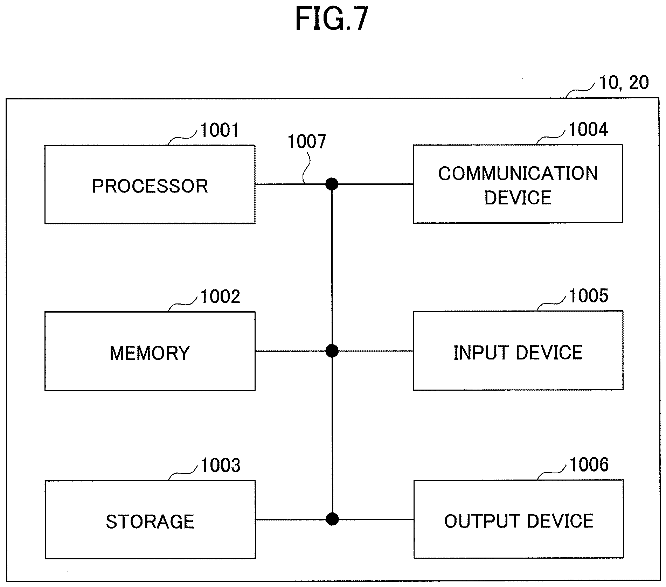

Furthermore, for example, both the terminal 10 and the base station 20 in one embodiment of the present invention may function as a computer that performs the process according to the embodiments. FIG. 7 is a diagram illustrating an example of a hardware configuration of each of the terminal 10 and the base station 20 according to the embodiments. Each of the terminal 10 and the base station 20 may be physically configured as a computer device including a processor 1001, a memory 1002, a storage 1003, a communication device 1004, an input device 1005, an output device 1006, a bus 1007, and the like.

In the following description, the term "device" may be replaced with a circuit, device, unit, or the like. The hardware configuration of each of the terminal 10 and the base station 20 may be configured to include one or more devices indicated by 1001 to 1006 illustrated in the figure or may be configured without including some devices.

Each function in each of the terminal 10 and the base station 20 is implemented such that predetermined software (program) is read on hardware such as the processor 1001 and the memory 1002, and the processor 1001 performs an operation and controls communication by the communication device 1004 and reading and/or writing of data in the memory 1002 and the storage 1003.

For example, the processor 1001 operates an operating system and controls the entire computer. The processor 1001 may be configured with a central processing unit (CPU: Central Processing Unit) including an interface with a peripheral device, a control device, an operation device, a register, and the like.

Furthermore, the processor 1001 reads a program (program code), a software module, or data from the storage 1003 and/or the communication device 1004 out to the memory 1002, and executes various types of processes according to them. A program causing a computer to execute at least some of the operations described in the embodiments is used as the program. For example, the transmitting unit 110, the receiving unit 120, and the control unit 130 of the terminal 10 illustrated in FIG. 5 may be implemented by a control program which is stored in the memory 1002 and operates on the processor 1001. The transmitting unit 210, the receiving unit 220, and the control unit 230 of the base station 20 illustrated in FIG. 6 may be implemented by a control program which is stored in the memory 1002 and operates on the processor 1001. Various types of processes are described to be performed by one processor 1001 but may be performed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 is also referred to as a "register," a "cache," a "main memory," or the like. The memory 1002 can store programs (program codes), software modules, or the like which are executable for carrying out the radio communication method according to an embodiment of the present invention.

The storage 1003 is a computer-readable recording medium and may be configured with, for example, at least one of an optical disk, such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 is also referred to as an "auxiliary storage device." The storage medium may be, for example, a database, a server, or any other appropriate medium including the memory 1002 and/or the storage 1003.

The communication device 1004 is hardware (a transmitting and receiving device) for performing communication between computers via a wired and/or wireless network and is also referred to as a "network device," a "network controller," a "network card," a "communication module," or the like. For example, the transmitting unit 110 and the receiving unit 120 of the terminal 10 may be implemented by the communication device 1004. Furthermore, the transmitting unit 210 and the receiving unit 220 of the base station 20 may be implemented by the communication device 1004.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected via the bus 1007 to communicate information with each other. The bus 1007 may be configured with a single bus or may be configured with different buses between the devices.

Furthermore, each of the terminal 10 and the base station 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented by at least one of these pieces of hardware.

### (Conclusion of the embodiments)

In this specification, at least the following terminal and the following communication method are disclosed.

A terminal including a control unit that performs at least one of the following in a case where a 2-step Random Access Channel (RACH) configuration is to be configured for a Bandwidth Part (BWP) reusing a RACH configuration parameter configured for another uplink BWP as a 2-step RACH configuration parameter, newly configuring the 2-step RACH configuration parameter, or configuring a default parameter as the 2-step RACH configuration parameter; and a transmitting unit that transmits a MessageA in the 2-step RACH by using the 2-step RACH configuration parameter.

According to the above-described configuration, there is provided a method that allows a terminal to perform an appropriate operation even if it is assumed in the terminal that a 4-step RACH parameter is reused as a 2-step RACH parameter and there is no corresponding 4-step RACH parameter.

The control unit may reuse a 4-step RACH configuration parameter configured for the other uplink BWP as the 2-step RACH configuration parameter.

According to the above-described configuration, signaling overhead can be reduced.

The control unit may reuse a 2-step RACH configuration parameter configured for the other uplink BWP as the 2-step RACH configuration parameter configured for the BWP.

According to the above-described configuration, signaling overhead can be reduced.

Upon detecting that the 2-step RACH configuration parameter to be configured for the BWP is a parameter that cannot be explicitly configured as a 2-step RACH configuration parameter, the control unit may reuse a 4-step RACH configuration parameter configured for the other uplink BWP as the 2-step RACH configuration parameter.

According to the above-described configuration, when a parameter that is unable to be explicitly configured as a 2-step RACH configuration parameter, such as preambleReceivedTargetPower, is used in a terminal, by reusing a 4-step RACH parameter configured for another uplink BWP, the terminal can be caused to perform an appropriate operation.

A communication method executed by a terminal, the method including performing at least one of the following in a case where a 2-step Random Access Channel (RACH) configuration is to be configured for a Bandwidth Part (BWP) reusing a RACH configuration parameter configured for another uplink BWP as a 2-step RACH configuration parameter, newly configuring the 2-step RACH configuration parameter, or configuring a default parameter as the 2-step RACH configuration parameter; and transmitting a MessageA in the 2-step RACH by using the 2-step RACH configuration parameter.

According to the above-described configuration, there is provided a method that allows a terminal to perform an appropriate operation even if it is assumed in the terminal that a 4-step RACH parameter is reused as a 2-step RACH parameter and there is no corresponding 4-step RACH parameter.

### (Supplement of embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention. Matters described in two or more items may be combined and used as necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the terminal 10 and the base station 20 are described using the functional block diagrams, but such devices may be implemented by hardware, software, or a combination thereof. Software executed by the processor included in the terminal 10 according to the embodiment of the present invention and software executed by the processor included in the base station 20 according to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

A notification of information is not limited to the aspect or embodiment described in this specification and may be given by any other method. For example, the notification of information may be given physical layer signaling (for example, downlink control information (DCI), uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an "RRC message" and may be, for example, an RRC connection setup message, an RRC connection reconfiguration message, or the like.

Each aspect and embodiment described in this specification is applicable to Long Term Evolution (LTE), LTE-Advanced (LTE-A), SUPER 3G, IMT-Advanced, 4G, 5G, future radio access (FRA), W-CDMA (registered trademark), GSM (registered trademark), CDMA2000, ultra mobile broadband (UMB), IEEE 802.11 (Wi-Fi), IEEE 802.16 (WiMAX), IEEE 802.20, ultra-wideband (UWB), Bluetooth (registered trademark), and systems using any other appropriate systems and/or next generation systems expanded on the basis of the systems.

The processing procedures, the sequences, the flowcharts, and the like of the respective aspects/embodiments described in this specification may be modified in order as long as there is no contradiction. For example, the method described in this specification presents elements of various steps in an exemplary order and is not limited to a presented specific order.

In this specification, a specific action that is supposed to be performed by the base station 20 may be performed by an upper node in some cases. In the network including one or more network nodes including the base station 20, various operations performed for communication with the terminal 10 can be obviously performed by the base station 20 and/or any network node (for example, an MME, an S-GW, or the like is considered, but it is not limited thereto) other than the base station 20. The example in which the number of network nodes excluding the base station 20 is one has been described above, but a combination of a plurality of other network nodes (for example, an MME and an S-GW) may be provided.

Each aspect/embodiment described in this specification may be used alone, may be used in combination, or may be switched in association with execution.

The terminal 10 may also be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other appropriate terms, depending on those having skill in the art.

The base station 20 may also be referred to as a Node B (NB), an enhanced Node B (eNB), a base station, a gNB, or other appropriate terms, by those having skill in the art.

A bandwidth part (BWP: Bandwidth Part) (which may also be referred to as a partial bandwidth or the like) may represent a subset of consecutive common RB (common resource blocks) in a carrier for a numerology. Here, the common RB may be identified by an index of an RB relative to a common reference point of the carrier. A PRB may be defined in a BWP and may be numbered within that BWP.

BWP may include BWP for UL (UL BWP) and BWP for DL (DL BWP). For a UE, one or more BWPs may be configured in one carrier.

At least one of the configured BWPs may be active, and the UE need not assume that predetermined signals/channels are transmitted or received outside the active BWP. The terms "cell" and "carrier" in this disclosure may be replaced with "BWP."

The terms "determine (determining)" and "decide (determining)" used in this specification may include various types of operations. For example, "determining" and "deciding" may include deeming that a result of judging, calculating, computing, processing, deriving, investigating, looking up (e.g., search in a table, a database, or another data structure), or ascertaining is determined or decided. Furthermore, "determining" and "deciding" may include, for example, deeming that a result of receiving (e.g., reception of information), transmitting (e.g., transmission of information), input, output, or accessing (e.g., accessing data in memory) is determined or decided. Furthermore, "determining" and "deciding" may include deeming that a result of resolving, selecting, choosing, establishing, or comparing is determined or decided. Namely, "determining" and "deciding" may include deeming that some operation is determined or decided.

A phrase "on the basis of" used in this specification is not limited to "on the basis of only" unless otherwise stated. In other words, a phrase "on the basis of" means both "on the basis of only" and "on the basis of at least."

"Include," "including," and variations thereof are intended to be comprehensive, similar to a term "provided with (comprising)" as long as the terms are used in this specification or claims set forth below. Furthermore, the term "or" used in this specification or claims set forth below is intended not to be an exclusive OR.

In the present disclosure, for example, when an article such as "a," "an," or "the" in English is added by a translation, such an article is assumed to include the plural unless it is obviously indicated that such an article does not include the plural.

Although the present invention has been described above in detail, it is obvious to those having skill in the art that the present invention is not limited to the embodiments described in this specification. The present invention can be carried out as revisions and modifications without departing from the gist and scope of the present invention defined by the claims set forth below. Accordingly, the description of this specification is intended to be exemplary and does not have any restrictive meaning to the present invention.

### LIST OF REFERENCE SYMBOLS

- 10: terminal
- 110: transmitting unit
- 120: receiving unit
- 130: control unit
- 20: base station
- 210: transmitting unit
- 220: receiving unit
- 230: control unit
- 1001: processor
- 1002: memory
- 1003: storage
- 1004: communication device
- 1005: input device
- 1006: output device

## Claims

1. A terminal comprising:
a control unit that performs at least one of the following in a case where a 2-step Random Access Channel (RACH) configuration is to be configured for a Bandwidth Part (BWP)
reusing a RACH configuration parameter configured for another uplink BWP as a 2-step RACH configuration parameter,
newly configuring the 2-step RACH configuration parameter, or
configuring a default parameter as the 2-step RACH configuration parameter; and
a transmitting unit that transmits a MessageA in the 2-step RACH by using the 2-step RACH configuration parameter.

2. The terminal according to claim 1, wherein the control unit reuses a 4-step RACH configuration parameter configured for the other uplink BWP as the 2-step RACH configuration parameter.

3. The terminal according to claim 1, wherein the control unit reuses a 2-step RACH configuration parameter configured for the other uplink BWP as the 2-step RACH configuration parameter configured for the BWP.

4. The terminal according to claim 1, wherein, upon detecting that the 2-step RACH configuration parameter to be configured for the BWP is a parameter that cannot be explicitly configured as a 2-step RACH configuration parameter, the control unit reuses a 4-step RACH configuration parameter configured for the other uplink BWP as the 2-step RACH configuration parameter.

5. A communication method executed by a terminal, the method comprising:
performing at least one of the following in a case where a 2-step Random Access Channel (RACH) configuration is to be configured for a Bandwidth Part (BWP)
reusing a RACH configuration parameter configured for another uplink BWP as a 2-step RACH configuration parameter,
newly configuring the 2-step RACH configuration parameter, or
configuring a default parameter as the 2-step RACH configuration parameter; and
transmitting a MessageA in the 2-step RACH by using the 2-step RACH configuration parameter.
